**Europäisches Patentamt**

**European Patent Office**

**Office européen des brevets**

(19)

(11) Veröffentlichungsnummer: **0 012 336 B1**

(12) **EUROPÄISCHE PATENTSCHRIFT**

(45) Veröffentlichungstag der Patentschrift:
14.03.84

(51) Int. Cl.³: **B 60 R 3/02, B 61 D 23/02**

(21) Anmeldenummer: 79104920.8

(22) Anmeldetag: 05.12.79

(54) **Fahrzeug für den öffentlichen Personenverkehr mit klappbarer Treppe.**

| | |
|---|---|
| (30) Priorität: 07.12.78 DE 2852917 | (73) Patentinhaber: **M.A.N. MASCHINENFABRIK AUGSBURG-NÜRNBERG Aktiengesellschaft, Dachauer Strasse 667 Postfach 50 06 20, D-8000 München 50 (DE)** |
| (43) Veröffentlichungstag der Anmeldung:<br>25.06.80 Patentblatt 80/13 | (72) Erfinder: **Wiesner, Gitta, Ringstrasse 67, D-6094 Bischofsheim (DE)**<br>Erfinder: **Japes, Manfred, Mozartstrasse 22, D-6095 Gustavsburg 1 (DE)** |
| (45) Bekanntmachung des Hinweises auf die Patenterteilung:<br>14.03.84 Patentblatt 84/11 | |
| (84) Benannte Vertragsstaaten:<br>**AT FR GB IT NL** | |
| (56) Entgegenhaltungen:<br>**CH - A - 399 928**<br>**DD - A - 29 254**<br>**FR - A - 1 383 843**<br>**US - A - 2 246 985**<br>**US - A - 2 690 719**<br>**US - A - 2 807 476**<br>**US - A - 3 572 754** | |

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Fahrzeug für den öffentlichen Personenverkehr mit klappbarer Treppe

Die Erfindung bezieht sich auf ein Fahrzeug für den öffentlichen Personenverkehr, insbesondere Omnibus, mit einer für einen seitlichen Einstieg vorgesehenen Treppe, die als im wesentlichen prismatischer Treppenkörper mit der Querschnittsfläche eines etwa rechtwinkeligen Dreiecks ausgebildet ist, dessen Hypotenusenfläche die Stufenkontur aufweist und der um eine zur Fahrzeuglängsachse parallele Achse so am Fahrzeug schwenkbar gelagert ist, daß eine Endstellung erreichbar ist, in der die in herausgeklappter Stellung untere Kathetenfläche in hineingeklappter Stellung senkrecht und zumindest nahezu bündig mit der Fahrzeugseitenwand ausgerichtet ist.

Ein solches Fahrzeug ist aus der CH-PS 399 938 vorbekannt. Klappbare Treppen, wie sie in dieser Druckschrift offenbart sind, werden bei Omnibussen unter anderem deshalb vorgesehen, um im Innenraum des Fahrzeugs störende Treppenschächte zu vermeiden, andererseits aber einen bequemen Zustieg zu ermöglichen, ohne dadurch die Fahrzeugumrisse durch weit vorragende Treppen in unerwünschter Weise zu vergrößern. Dieser Zweck wird von der vorbekannten Anordnung nicht in optimaler Weise erfüllt. Zum einen umfaßt die vorbekannte klappbare Treppe nur einen Teil der insgesamt notwendigen Treppenstufen, so daß trotz einer klappbaren Treppeneinheit im Fahrzeug ein Treppenschacht mit allen sich daraus ergebenden Nachteilen vorgesehen werden muß. Zum anderen ist das Gewicht des vorbekannten Treppenkörpers relativ hoch, weil es sich um eine Stahlfachwerkkonstruktion handelt. Hohes Gewicht ist jedoch im Zusammenhang mit einem schwenkbaren Treppenkörper von Nachteil, weil hierdurch auch das Trägheitsmoment des Treppenkörpers um die Schwenkachse entsprechend erhöht wird und demzufolge die Antriebsleistung für die Schwenkbewegung des Treppenkörpers entsprechend hoch gewählt werden muß. Hohe Antriebsleistungen bedingen aber ihrerseits wieder hohes Gewicht und entsprechend hohe Baukosten, so daß unter Umständen darauf verzichtet werden muß, eine Treppe in ihrer Gesamtheit schwenkbar auszubilden.

Aufgabe der vorliegenden Erfindung ist es deshalb, ein gattungsgemäßes Fahrzeug so auszubilden, daß mit vergleichsweise geringem baulichen Aufwand, insbesondere was die Antriebsleistung anlangt, eine in ihrer Gesamtheit klappbare Treppe geschaffen wird.

Erfindungsgemäß wird die gestellte Aufgabe dadurch gelöst, daß bei einem gattungsgemäßen Fahrzeug der Treppenkörper ein Vollwandhohlkörper (= geschlossener Hohlkörper) ist, der alle Treppenstufen umfaßt und unterhalb eines schachtlosen Fußbodens des Fahrzeugs angeordnet ist.

Eine besondere Ausführungsart der Erfindung wird in den abhängigen Patentansprüchen angegeben.

Ein erfindungsgemäß ausgebildetes Fahrzeug hat zunächst den Vorteil, daß der gesamte, innerhalb der Seitenwände liegende Innenraum zur Beförderung von Fahrgästen ausgenutzt werden kann, d. h. daß keinerlei Platzeinbußen durch Treppenschächte hingenommen werden müssen. Ein weiterer, wesentlicher Vorteil der Erfindung besteht darin, daß das Ausfahren der Treppe, das als Schwenkbewegung um einen Schwenkwinkel von etwa 90° gestaltet ist, sehr schnell erfolgen kann, ohne daß hierzu große Antriebsleistungen notwendig wären. Ein weiterer, wesentlicher Vorteil der Erfindung besteht darin, daß die Treppe in eingefahrenem Zustand, d. h. also bei Nichtbenutzung im Raum unterhalb des Omnibusbodens nach außen hin unsichtbar verstaut ist und dieser Verstauraum durch die untere Kathetenfläche des Treppenkörpers abgeschlossen ist, so daß das äußere Erscheinungsbild des Omnibusses lediglich eine, im wesentlichen glatte durchlaufende Seitenwand zeigt. Schließlich läßt sich die erfindungsgemäße Treppenausbildung ohne großen Aufwand an Herstellungskosten verwirklichen.

Anhand der beigefügten Zeichnungen wird ein Ausführungsbeispiel der Erfindung erläutert. In den Zeichnungen zeigt

Fig. 1 einen Teilquerschnitt durch einen Omnibus mit einem klappbaren Treppenkörper,

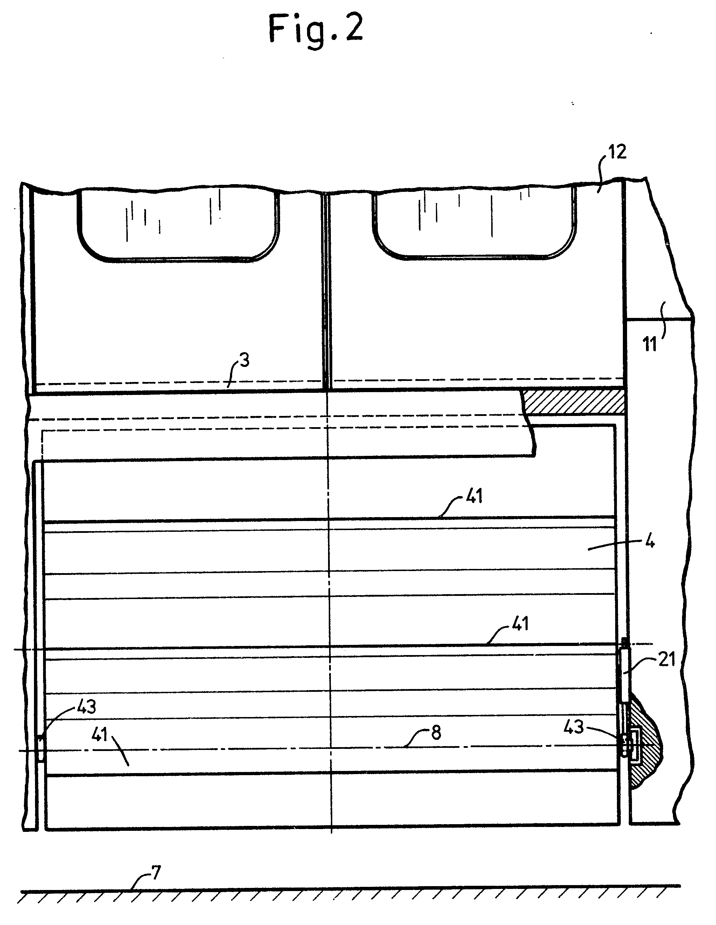

Fig. 2 eine Ansicht der Anordnung nach Fig. 1 entsprechend Pfeilrichtung II in Fig. 1.

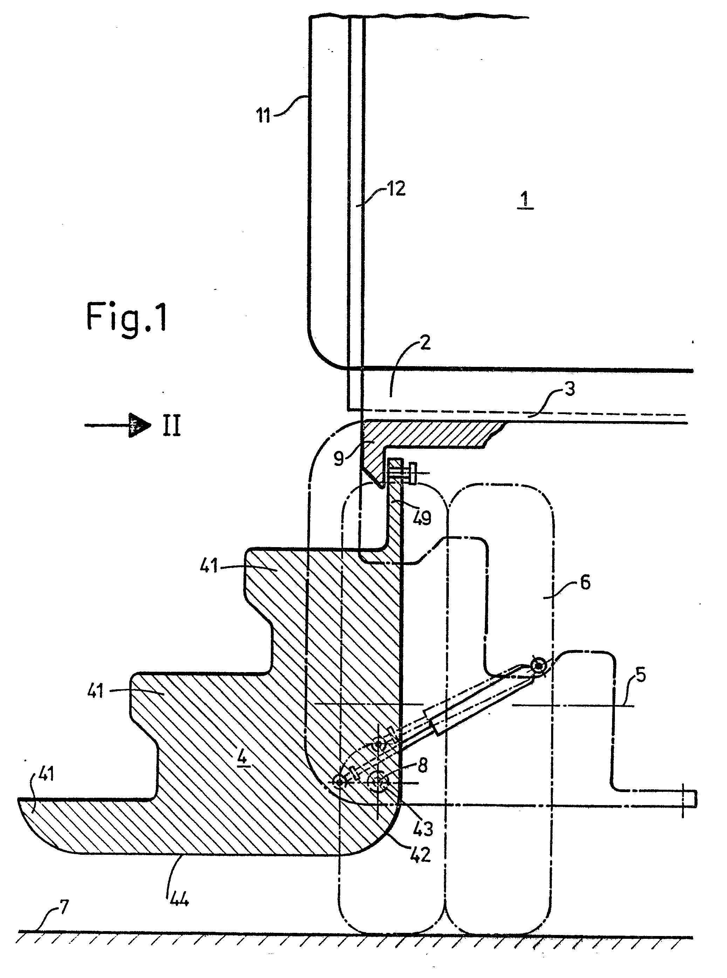

In Fig. 1 ist ein Omnibusaufbau in seiner Gesamtheit mit 1 bezeichnet. Im Innenraum des Omnibusses befindet sich ein Fußboden 3. Unterhalb des Fußbodens 3 ist eine Achse 5 und ein zwillingsbereiftes Rad 6, mit dem der Omnibus auf einer Fahrbahn 7 steht, angedeutet. In einer Seitenwand 11 des Omnibusaufbaus 1 befindet sich eine Tür 12, die einen seitlichen Einstieg zum Innenraum des Omnibusaufbaus 1 ermöglicht. Unterhalb der Tür 12 ist eine klappbare Treppe angeordnet, die als prismatischer Treppenkörper 4 ausgebildet ist. Die Querschnittsfläche des Treppenkörpers 4 hat etwa die Kontur eines rechtwinkligen Dreiecks, wobei die Hypotenuse des Dreiecks die Stufenkontur mit insgesamt drei Treppenstufen 41 aufweist. Im Bereich der rechtwinkligen Längskante 42, die im gezeigten Ausführungsbeispiel abgerundet ist, befinden sich am Treppenkörper 4 Lagerzapfen 43, die in entsprechenden Lagerbohrungen im Rahmenunterbau des Omnibusaufbaus 1 gelagert sind. Die Schwenkachse verläuft dabei parallel zur Fahrzeuglängsachse und liegt etwa unterhalb der Tür 12. In Fig. 1 ist der Treppenkörper 4 in Betriebslage, d. h. in herausgeklappter Stellung dargestellt, in der die untere Kathetenfläche 44 des Treppenkörpers 4 parallel zur Fahrbahn liegt. Wird der Treppenkörper 4 um die Schwenkachse 8 um 90° im Uhrzeigersinn geschwenkt, was vorzugsweise mittels beidseitig angeordneter Kolbenzylinderelemente 21 erfolgt (nur eines ist gezeigt), so wird die strichpunktiert eingezeichnete Lage des Treppenkörpers erreicht, in der die untere Kathetenfläche 44 senkrecht ausgerichtet ist und genau oder nahezu bündig mit der Fahrzeugseitenwand 11 verläuft. Die Stufen 41 befinden sich unterhalb des Fußbodens 3 im Bereich des Fachwerkrahmens des Omnibusses. Um jeweils eine eindeutig bestimmte Endstellung des Treppenkörpers 4 zu erhalten, ist ein Anschlag 9 vorgesehen, der nach beiden Richtungen als Endanschlag wirkt, indem einmal die unterste Stufe 41 von außen her sich an diesen Anschlag 9 anlegt, während bei herausgeklapptem Treppenkörper 4 sich ein von der obersten Stufe 41 aus nach oben sich erstreckender Anschlag 49 von innen her an den Anschlag 9 anlegt.

## Patentansprüche

1. Fahrzeug für den öffentlichen Personenverkehr, insbesondere Omnibus, mit einer für einen seitlichen Einstieg vorgesehenen Treppe, die als im wesentlichen prismatischer Treppenkörper (4) mit der Querschnittsfläche eines etwa rechtwinkeligen Dreiecks ausgebildet ist, dessen Hypotenusenfläche die Stufenkontur aufweist und der um eine zur Fahrzeuglängsachse parallele Achse (8) so am Fahrzeug schwenkbar gelagert ist, daß eine Endstellung erreichbar ist, in der die in herausgeklappter Stellung untere Kathetenfläche (44) in hineingeklappter Stellung senkrecht und zumindest nahezu bündig mit der Fahrzeugseitenwand (11) ausgerichtet ist, dadurch gekennzeichnet, daß der Treppenkörper (4) ein Vollwandhohlkörper ( = geschlossener Hohlkörper) ist, der alle Treppenstufen (41) umfaßt und unterhalb eines schachtlosen Fußbodens (3) des Fahrzeugs angeordnet ist.

2. Fahrzeug nach Anspruch 1, dadurch gekennzeichnet, daß für die Schwenkbewegung des Treppenkörpers (4), wie an sich bekannt, an seinen Stirnseiten hydraulische oder pneumatische Kolbenzylindereinheiten (21) vorgesehen sind.

3. Fahrzeug nach Anspruch 2, dadurch gekennzeichnet, daß die Kolbenzylindereinheiten (21) vom Fahrersitz aus steuerbar sind.

4. Fahrzeug nach den Ansprüchen 1 bis 3, dadurch gekennzeichnet, daß der Treppenkörper (4) im wesentlichen aus faserverstärktem Kunststoff besteht.

## Claims

1. A vehicle for public passenger transport, in particular a bus, having steps for a side entrance, the steps being in the form of a substantially prism-shaped step unit (4) having the cross-section of a substantially right-angled triangle the hypotenuse of which comprises the profile of the steps, the step unit (4) being pivotably mounted on the vehicle about an axis (8) parallel to the longitudinal axis of the vehicle so that in an end, folded-away position, a hypotenuse side (44) of the triangle forming the bottom surface of the step unit in the opened position is perependicular and is at least substantially flush with the side wall (11) of the vehicle, characterized in that the step unit (4) is a hollow body with a solid wall (a closed hollow body) which comprises all the steps (41) and is situated beneath a floor (3) of the vehicle without a stair well.

2. A vehicle according to claim 1, characterized in that hydraulic or pneumatic piston cylinder units (21) are provided on the end faces of the step unit (4) as known per se for the pivotal movement thereof.

3. A vehicle according to claim 2, characterized in that the piston cylinder units (21) may be controlled from the driving seat.

4. A vehicle according to claims 1 to 3 characterized in that the step unit (4) substantially consists of fibre-reinforced plastics material.

## Revendications

1. Véhicule pour le transport public des voyageurs, notamment autobus, avec un marchepied prévu pour l'accès latéral, agencé en tant que corps d'escalier (4) essentiellement prismatique avec une section transversale en forme d'un triangle sensiblement rectangle dont l'hypoténuse présente le contour des marches, ce corps étant monté sur le véhicule pour pivoter autour d'un axe (8), parallèle à l'axe longitudinal du véhicule, de manière qu'on puisse atteindre une position d'extrémité dans laquelle la face (44) du côté de l'angle droit situé en bas dans la position de basculement sortie soit, en position de basculement rentrée, dirigé verticalement et, au moins approximativement, dans l'alignement de la paroi latérale (11) du véhicule, caractérisé en ce que le corps d'escalier (4) est un corps creux à paroi pleine ( = corps creux fermé) comportant toutes les marches d'escalier (41) et disposé sous le plancher (3) sans fosse du véhicule.

2. Véhicule selon la revendication 1, caractérisé en ce que pour le mouvement de pivotement du corps d'escalier (4) sont prévues sur ses faces frontales, comme cela est connu en soi, des unités à vérins hydrauliques ou pneumatiques (21).

3. Véhicule selon la revendication 2, caractérisé en ce que les unités à vérins (21) peuvent être commandées à partir du siège du chauffeur.

4. Véhicule selon les revendications 1 à 3, caractérisé en ce que le corps d'escalier (4) est essentiellement constitué en matière plastique renforcée par des fibres.

# Fig.1

# Fig.2